# Europäisches Patentamt

## European Patent Office

## Office européen des brevets

(19)

(11) Numéro de publication: **0 209 460**
**B1**

# (12) FASCICULE DE BREVET EUROPÉEN

(45) Date de publication du fascicule du brevet:
27.12.89

(51) Int. Cl.⁴: **H 02 K 49/04**

(21) Numéro de dépôt: **86401557.3**

(22) Date de dépôt: **11.07.86**

---

(54) Perfectionnements aux rotors induits des ralentisseurs électromagnétiques.

---

(30) Priorité: 11.07.85 FR 8510654

(43) Date de publication de la demande:
21.01.87 Bulletin 87/4

(45) Mention de la délivrance du brevet:
27.12.89 Bulletin 89/52

(84) Etats contractants désignés:
AT BE CH DE GB IT LI NL SE

(56) Documents cité:
DE-A-3 239 440
FR-A-1 012 501
FR-A-1 180 373
FR-A-2 218 686

(73) Titulaire: **LABAVIA S.G.E., 5, avenue Newton Parc d'Activités, F-78390 Bois d'Arcy (FR)**

(72) Inventeur: **Courtois, Jean- Claude, Rue Andrémont Sagy, F-95450 Vigny (FR)**

(74) Mandataire: **Behaghel, Pierre, CABINET PLASSERAUD 84 rue d'Amsterdam, F-75009 Paris (FR)**

## Description

L'invention est relative aux rotors induits des ralentisseurs électromagnétiques, notamment pour véhicules, rotors comprenant au moins un disque en matière ferromagnétique propre à défiler en regard d'une couronne statorique de pôles électromagnétiques alternativement positifs et négatifs dont il n'est séparé que par un entrefer, ce disque étant alors freiné et échauffé du fait de la création de courants de Foucault dans sa masse.

Elle vise plus particulièrement, parmi ces rotors, ceux dont le disque est relié à une bague de fixation par une couronne de bras formant ailettes de ventilation, les portions de plus grand diamètre de ces bras faisant saillie axialement sur la face du disque opposée à l'entrefer et étant inclinées sur les rayons correspondants, et les crêtes de ces portions étant réunies entre elles par une joue annulaire présentant une face extérieure exposé à l'air libre dans le ralentisseur terminé. (Voir par exemple les brevets FR-1 180 373 et DE-3 239 440.)

L'évacuation des calories engendrées dans le disque d'un tel rotor par les courants de Foucault, lors de la mise en service du ralentisseur équipé de ce rotor, se fait essentiellement par conduction vers la joue à travers les bras et par rayonnement et convection à partir du disque, des bras et de la joue, ce dernier phénomène étant fortement renforcé par ventilation: en effet le profil d'ailettes adopté pour les bras fait jouer au rotor un rôle de ventilateur en balayant par un courant d'air de refroidissement les surfaces chaudes à refroidir du disque, des bras et de la joue.

Avec les modes de réalisation connus des rotors considérés - pour lesquels l'ensemble du disque, de la bague, des bras et de la joue est généralement constitué par un seul bloc moulé en acier - ladite évacuation des calories engendrées dans le disque laisse à désirer.

C'est ainsi que le disque en question peut être porté au rouge, sa température atteignant ou même dépassant une valeur de l'ordre de 700° C, alors que la joue demeure à une température inférieure à 500° C.

Or, il importe de refroidir efficacement le disque.

En effet, le couple de ralentissement susceptible d'être engendré par le ralentisseur équipé de ce disque est réduit dans une proportion considérable lorsque ce disque s'échauffe.

C'est ainsi que ce couple peut décroître d'une valeur C à une valeur C/3, pour des valeurs données de la vitesse de rotation et de la puissance électrique consommée, lorsque le disque s'échauffe de la température ambiante à une température de l'ordre de 700° C.

L'invention a pour but, surtout, d'améliorer le refroidissement du disque au cours du fonctionnement du ralentisseur et donc d'augmenter la valeur du couple à chaud engendré par cet appareil.

A cet effet les rotors du genre en question selon l'invention sont essentiellement caractérisés en ce que les portions de bras formant entretoises entre la joue et le disque sont constituées par une pluralité de tronçons s'étendant chacun sur une portion seulement de la largeur radiale de ces deux éléments annulaires, chaque tronçon d'entretoise se présentant sous la forme d'une tuile courbe tournant sa concavité vers l'arrière par rapport au sens de rotation du rotor, les tuiles formant une pluralité de couronnes concentriques, les tuiles composant chaque couronne étant identiques entre elles et équidistantes, les nombres des tuiles composant les différentes couronnes étant identiques entre eux et chaque tuile d'une couronne chevauchant radialement en partie la tuile radialement la plus voisine de chaque couronne voisine.

Dans des modes de réalisation préférés, on a recours en outre à l'une et/ou à l'autre des dispositions suivantes:

- chaque tuile est légèrement décalée angulairement vers l'avant par rapport au prolongement extérieur de la tuile plus proche qu'elle de l'axe du rotor, si l'on considère le sens de rotation de ce rotor,

- chaque tuile chevauche circonférentiellement en partie les tuiles de chaque couronne voisine,

- les différentes couronnes de tuiles sont juxtaposées radialement les unes autour des autres,

- si l'on considère le chevauchement des tuiles deux à deux selon les directions perpendiculaires aux surfaces moyennes de ces tuiles, la section de chaque zone de chevauchement considérée par un plan perpendiculaire à l'axe du rotor présente sensiblement la forme d'un rectangle et de préférence celle d'un carré,

- le nombre des couronnes de tuiles est égal à trois,

- le nombre des tuiles de chaque couronne est trois fois supérieur à celui des bras,

- les tuiles sont épaissies au niveau de leurs bases contiguës au disque et cet épaississement est d'autant plus prononcé que la zone de tuile considérée est plus éloignée de l'axe du rotor.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ces dessins, montrent un rotor de ralentisseur électromagnétique établi conformément à l'invention respectivement en demi-vue en bout selon la flèche I de la figure 2 et en demi-coupe axiale selon II-II figure 1, le stator correspondant étant en outre représenté partiellement en spectre sur la figure 2.

La figure 3 est une coupe partielle de la figure 1 selon III-III.

Le mot "rotor" utilisé dans le présent texte désigne plus précisément chacun des sous-ensembles monoblocs 1 qui sont compris par l'ensemble rotorique d'axe X d'un ralentisseur électromagnétique ou à "courants de Foucault" et qui comportent un disque induit 2 en matériau ferromagnétique.

Comme on le sait, un tel disque 2 est solidarisé avec l'arbre 3 à ralentir, tel que l'arbre de transmission d'un véhicule, et il est monté de façon à pouvoir défiler devant le stator 4 du ralentisseur, ou plus précisément devant une couronne de pôles inducteurs 5 alternativement positifs et négatifs faisant partie de ce stator, avec interposition d'un entrefer E, le disque 2 en question étant alors le siège de courants de Foucault qui se traduisent par un freinage et un échauffement de ce disque.

L'ensemble rotorique du ralentisseur comprend, en plus du rotor ou sous-ensemble défini ci-dessus, lequel est unique ou de préférence dédoublé symétriquement de part et d'autre du stator, une pièce intermédiaire 6 de révolution autour de l'axe X, telle qu'un manchon, moyeu ou plateau, elle-même fixée, généralement par boulonnage, sur l'arbre 3 à ralentir, chaque "rotor" 1 ici considéré étant de son côté fixé par boulonnage sur cette pièce intermédiaire.

D'une façon encore connue en soi, chaque rotor 1 comprend, en plus du disque 2:

- une bague de fixation 7 de diamètre moyen inférieur au diamètre intérieur du disque 2, percée d'alésages axiaux 8, filetés ou non, destinés à recevoir des boulons (non représentés) de fixation de cette bague sur la pièce intermédiaire 6,

- une couronne d'ailettes de ventilation 9 faisant saillie sur la face, du disque 2, opposée à sa face destinée à délimiter l'entrefer E, certaines au moins de ces ailettes (notamment une sur deux ou une sur trois) étant prolongées vers l'axe X de façon à former des bras 10 reliant le disque à la bague 7,

- et une jante ou joue annulaire 11 s'étendant en général parallèlement au disque et reliant les crêtes des portions de plus grand diamètre des ailettes 9 de façon à former entre ces ailettes, le disque et la joue des canaux de guidage 12 pour l'air de ventilation.

Les ailettes 9 et les bras 10 qui les prolongent éventuellement sont inclinés vers l'arrière par rapport au sens de rotation R du rotor, si l'on considère les rayons croissants.

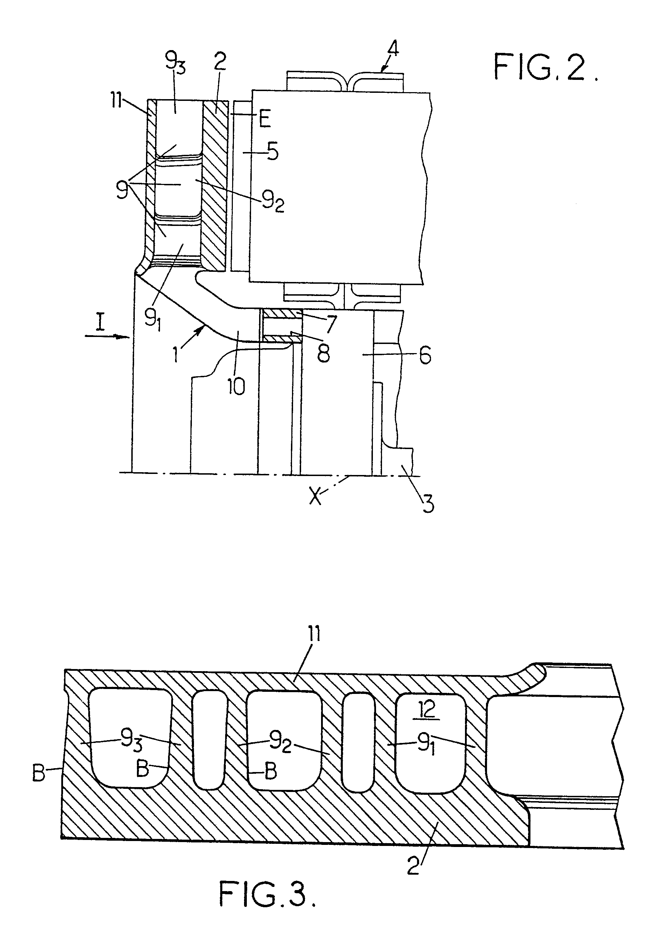

Les bras 10 sont de préférence axialement coudés, comme dans le mode de réalisation illustré sur la figure 2, de façon à "rentrer" axialement la bague 7 vers l'intérieur du stator et à réduire ainsi l'encombrement axial de la portion centrale du rotor.

Mais lesdits bras 10 pourraient également être "droits", leurs lignes moyennes demeurant alors sensiblement contenues dans un même plan transversal.

Le nombre des bras 10 de chaque rotor est avantageusement égal à huit et le nombre total de ses ailettes 9, à seize ou vingt-quatre.

C'est l'évacuation des calories engendrées dans le disque 2 par la création des courants de Foucault lors des mises en service du ralentisseur que la présente invention se propose d'améliorer.

A cet effet, l'on décompose chaque ailette 9 en au moins deux tronçons écartés l'un de l'autre, se chevauchant radialement en partie, et présentant chacun la forme d'une tuile incurvée tournant sa concavité vers l'arrière si l'on considère le sens de rotation R du rotor.

Dans le mode de réalisation préféré illustré,

- les tuiles en lesquelles est décomposée une même ailette sont sensiblement identiques entre elles,

- elles sont au nombre de trois, désignées respectivement par les références $9_1$, $9_2$ et $9_3$ de sorte que l'ensemble des tuiles composent trois couronnes concentriques avec des nombres identiques de tuiles pour chaque couronne,

- et chaque tuile est décalée angulairement vers l'avant, si l'on considère le sens de rotation R, par rapport au prolongement extérieur de la tuile voisine plus proche qu'elle de l'axe X.

Les couronnes de tuiles considérées peuvent être simplement juxtaposées concentriquement deux à deux.

Selon une variante, chaque tuile d'une couronne plonge radialement sur une petite distance entre les tuiles des couronnes voisines, ce qui correspond à un léger chevauchement circonférentiel de ces tuiles.

L'expérience montre que le remplacement des ailettes monobloc antérieurement connues par les ensembles de tuiles définis ci-dessus améliore dans une proportion notable le refroidissement du disque tout en augmentant seulement dans une proportion négligeable le couple nécessaire à l'entraînement du rotor du fait d'un très léger accroissement des "pertes par ventilation".

Cette amélioration du refroidissement est due à la conjonction de plusieurs phénomènes et en particulier des suivants:

- augmentation de la turbulence de l'air de ventilation, ce qui se traduit par une attaque renouvelée des tuiles par ledit air, avec application de filets d'air même contre les faces concaves arrière desdites tuiles, faces normalement soumises à des dépressions, ce qui améliore l'échange thermique recherché entre les surfaces métalliques à refroidir et l'air,

- augmentation de la superficie desdites surfaces d'échange.

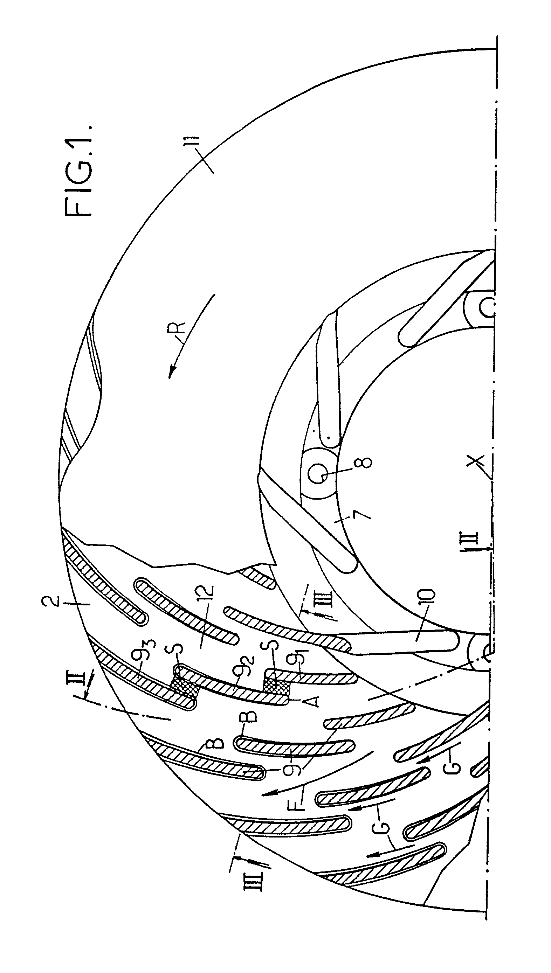

Si l'on considère chaque zone de chevauchement mutuel de deux tuiles successives selon une direction perpendiculaire aux faces, de ces tuiles, qui se chevauchent, faces qui sont parallèles entre elles, la section S (figure 1) de cette zone selon un plan perpendiculaire à l'axe X est sensiblement rectangulaire et de préférence carrée.

Cette dernière hypothèse semble correspondre à un optimum aéraulique, tenant compte à la fois des exigences contradictoires du refroidissement maximum et des pertes par ventilation minimum, c'est-à-dire de la résistance minimum opposée à l'entraînement du rotor.

Avec la réalisation ci-dessus décrite, le chemin emprunté par l'air de ventilation de l'intérieur à l'extérieur du rotor peut être

- soit le chemin direct indiqué par la flèche F (figure 1), pour lequel l'air est essentiellement guidé par les faces internes des extrémités aval des tuiles successives, c'est-à-dire de leurs extrémités les plus éloignées de l'axe X,

- soit l'un des chemins indirects G passant entre ces tuiles successives.

Ces deux types de chemins F et G sont généralement combinés successivement pour la plus grande partie du volume d'air en circulation.

Pour bénéficier au maximum de la possibilité d'extraire par conduction et convexion, à l'aide des ailettes fragmentées ou tuiles ci-dessus décrites, les calories engendrées dans le disque 2, il est avantageux d'accroître la section des tuiles à proximité des zones, du disque, où la quantité de chaleur engendrée est la plus élevée, zones qui correspondent aux circonférences les plus longues et qui sont donc les plus éloignées de l'axe X.

A cet effet on épaissit les bases, des tuiles, qui sont contiguës au disque dans ses zones de plus grand rayon.

C'est ainsi que, dans le mode de réalisation illustré, la section droite de chaque tuile interne $9_1$, considérée selon un plan parallèle à l'axe X et perpendiculaire à la surface moyenne de cette tuile, présente sur toute l'étendue de cette tuile la forme d'un rectangle allongé (figure 3) alors que, pour chaque tronçon intermédiaire $9_2$, cette section droite évolue progressivement de ladite forme rectangulaire dans la zone amont de la tuile jusqu'à la forme d'un trapèze isocèle dans sa zone aval et que cette forme de trapèze isocèle se retrouve sur toute l'étendue de chaque tuile externe $9_3$ tout en étant de plus en plus prononcée vers les rayons croissants.

Les bases ainsi épaissies des tuiles $9_2$ et $9_3$, correspondant aux grandes bases des trapèzes isocèles, sont visibles en B sur les figures 1 et 3.

En suite de quoi, et quel que soit le mode de réalisation adopté, on dispose finalement d'un rotor induit de ralentisseur électromagnétique dont la constitution, le fonctionnement et les avantages (notamment l'amélioration du refroidissement et par conséquent l'accroissement du couple de freinage à chaud) résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notamment:

- celles où le nombre des couronnes de tuiles serait différent de trois et en particulier égal à deux,

- celles où ces tuiles des différentes couronnes présenteraient des longueurs différentes dans la direction de circulation de l'air de ventilation,

- celles où chaque tuile serait creusée dans son épaisseur par une poche débouchant à l'air libre à travers la face transversale libre de la joue 11, poche dont le fond serait constitué par le disque 2 lui-même, conformément aux enseignements du brevet EP-A-86 400 796.

**Revendications**

1. Rotor induit de ralentisseur électromagnétique, comprenant au moins un disque induit (2) destiné à défiler en regard de l'inducteur statorique avec interposition d'un entrefer (E), disque relié à une bague de fixation (7) par une couronne de bras (10) formant ailettes de ventilation, les portions de plus grand diamètre (9) de ces bras faisant saillie axialement sur la face du disque, opposée à l'entrefer et étant inclinées sur les rayons correspondants et leurs crêtes étant réunies entre elles par une joue annulaire (11) présentant une face extérieure exposée à l'air libre dans le ralentisseur terminé, caractérisé en ce que les portions de bras (9) formant entretoises entre la joue et le disque sont constituées par une pluralité de tronçons ($9_1$, $9_2$, $9_3$) s'étendant chacun sur une portion seulement de la largeur radiale de ces deux éléments annulaires (2 et 11), chaque tronçon d'entretoise se présentant sous la forme d'une tuile courbe tournant sa concavité vers l'arrière par rapport au sens de rotation (R) du rotor, les différentes tuiles ($9_1$, $9_2$, $9_3$) formant une pluralité de couronnes concentriques, les tuiles composant chaque couronne étant identiques entre elles et équidistantes, les nombres des tuiles composant les différentes couronnes étant identiques entre eux et chaque tuile d'une couronne chevauchant radialement en partie la tuile radialement la plus voisine de chaque couronne voisine.

2. Rotor selon la revendication 1, caractérisé en ce que chaque tuile est légèrement décalée angulairement vers l'avant par rapport au prolongement extérieur de la tuile plus proche qu'elle de l'axe (X) du rotor, si l'on considère le sens de rotation (R) de ce rotor.

3. Rotor selon l'une quelconque des précédentes revendications, caractérisé en ce que les différentes couronnes de tuiles sont juxtaposées radialement les unes autour des autres.

4. Rotor selon l'une quelconque des précédentes revendications, caractérisé en ce que, si l'on considère le chevauchement des tuiles ($9_1$, $9_2$, $9_3$) deux à deux selon les directions perpendiculaires aux surfaces moyennes de ces tuiles, la section de chaque zone de chevauchement considérée par un plan perpendiculaire à l'axe du rotor présente sensiblement la forme d'un rectangle et de préférence celle d'un carré (S).

5. Rotor selon l'une quelconque des précédentes revendications, caractérisé en ce que le nombre des couronnes de tuiles est égal à trois.

6. Rotor selon l'une quelconque des précédentes revendications, caractérisé en ce que le nombre des tuiles de chaque couronne est trois fois supérieur à celui des bras (10).

7. Rotor selon l'une quelconque des précédentes revendications, caractérisé en ce que les tuiles ($9_1$, $9_2$, $9_3$) sont épaissies au niveau de leurs bases (B) contiguës au disque (2) et en ce que cet épaississement est d'autant plus prononcé que la zone de tuile considérée est plus éloignée de l'axe (X) du rotor.

**Patentansprüche**

1. Induzierter Rotor für elektromagnetische Bremsen, mit zumindest einer induzierten Scheibe (2), die dazu bestimmt ist, an einem Induktor-Stator unter Zwischenschaltung eines Luftspaltes (E) vorbeizuwandern, wobei die Scheibe mit einem Befestigungsring (7) über einen Kranz von Armen (10) verbunden ist, der Ventilationsflügel bildet, und wobei die Teile (9) größeren Durchmessers dieser Arme in axialer Richtung von der dem Luftspalt gegenüberliegenden Scheibenfläche abstehen und gegen die entsprechenden Radien geneigt sind, während ihre Scheitel untereinander durch einen Ringflansch (11) verbunden sind, dessen Außenseite der freien Luft am Ende der Bremse ausgesetzt ist, dadurch gekennzeichnet, daß die Armteile (9), welche Stege zwischen dem Flansch und der Scheibe bilden, aus mehreren Abschnitten ($9_1$, $9_2$, $9_3$) bestehen, die sich jeweils nur über einen Teil der radialen Breite dieser beiden Ringelemente (2 und 11)

erstrecken, wobei jeder Stegabschnitt die Form eines gekrümmten Dachziegels hat, dessen konkave Seite bezüglich der Drehrichtung (R) des Rotors nach hinten gerichtet ist, wobei ferner die verschiedenen Dachziegel ($9_1$, $9_2$, $9_3$) mehrere konzentrische Kränze bilden und die jeden Kranz bildenden Dachziegel untereinander identisch und äquidistant angeordnet sind, und wobei die Anzahl der Dachziegel in allen Kränzen gleich groß ist und jeder Dachziegel eines Kranzes zum Teil den radial am nächsten liegenden Dachziegel jedes benachbarten Kranzes in radialer Richtung überlappt.

2. Rotor nach Anspruch 1, dadurch gekennzeichnet, daß jeder Dachziegel bezüglich einer nach außen gerichteten Verlängerung jenes Dachziegels, der ihm näher liegt als die Rotorachse (X), winkelmäßig in der Drehrichtung (R) des Rotors leicht nach vorne versetzt ist.

3. Rotor nach einem der vorhergehenden Ansprüche, dadurch gekennzeichnet, daß die verschiedenen Dachziegelkränze in radialer Richtung einander umgebend nebeneinander angeordnet sind.

4. Rotor nach einem der vorhergehenden Ansprüche, dadurch gekennzeichnet, daß unter Berücksichtigung der paarweisen Überlappung der Dachziegel ($9_1$, $9_2$, $9_3$) in zu den Mittelflächen der Dachziegel senkrechten Richtungen der Abschnitt jeder Überlappungszone, in einer senkrecht zur Achse des Läufers verlaufenden Ebene betrachtet, im wesentlichen die Form eines Rechteckes und vorzugsweise eines Quadrates (S) hat.

5. Rotor nach einem der vorhergehenden Ansprüche, dadurch gekennzeichnet, daß die Anzahl der Dachziegelkränze drei beträgt.

6. Rotor nach einem der vorhergehenden Ansprüche, dadurch gekennzeichnet, daß die Anzahl der Dachziegel jedes Kranzes dreimal so groß wie jene der Arme (10) ist.

7. Rotor nach einem der vorhergehenden Ansprüche, dadurch gekennzeichnet, daß die Dachziegel ($9_1$, $9_2$, $9_3$) auf der Höhe ihrer an die Scheibe (2) angrenzenden Basen (B) verdickt sind und daß diese Verdickung umso ausgeprägter ist, je weiter die betrachtete Dachziegelzone von der Achse (X) des Rotors entfernt ist.

**Claims**

1. Armature rotor of an electromagnetic retarder, comprising at least one disc (2) arranged to move opposite of the inductor stator from which it is separated by an air gap (E), said disc being joined to a fastening ring (7) by a crown of arms (10) forming ventilation fins, the portions of largest diameter (9) of these arms projecting axially on the face, of the disc, which is the farthest from the air gap and being inclined to the corresponding radii and their crests being joined to one another by an annular flange (11), an external fact of which is exposed to the free air in the completed retarder, characterized in that the arm portions (9) forming cross pieces between the flange and the disc are constituted by a plurality of sections ($9_1$, $9_2$, $9_3$) each extending over one portion only of the radial width of these two annular elements (2 and 11), each cross-piece section exhibiting the shape of a curved tile orienting its concavity rearwards with respect to the direction of rotation (R) of the rotor, the different tiles ($9_1$, $9_2$, $9_3$) forming a plurality of concentric rings, the tiles composing each ring being identical with one another and equidistant, the numbers of tiles composing the different rings being identical with one another and each tile of one ring straddling radially in part the tile radially closest to each neighbouring ring.

2. Rotor according to claim 1, characterized in that each tile is slightly offset angularly forward with respect to the outer extension of the tile closer than it to the axis (X) of the rotor, if the direction of rotation (R) of this rotor is considered.

3. Rotor according to any one of the preceding claims, characterized in that the different crowns of tiles are juxtaposed radially around one another.

4. Rotor according to any one of the preceding claims, characterized in that, if the straddling of the tiles ($9_1$, $9_2$, $9_3$) two by two along directions perpendicular to the middle surfaces of these tiles is considered, the cross section of each straddling zone considered through a plane perpendicular to the axis of the rotor exhibits substantially the shape of a rectangle and preferably that of a square (S).

5. Rotor according to any one of the preceding claims, characterized in that the number of rings of tiles is equal to three.

6. Rotor according to any one of the preceding claims, characterized in that the number of tiles of each ring is three times greater than that of the arms (10).

7. Rotor according to any one of the preceding claims, characterized in that the tiles ($9_1$, $9_2$, $9_3$) are thickened at the level of their bases (B) contiguous with the disc (2) and in that this thickening is all the more pronounced as the zone of the tile concerned is more remote from the axis (X) of the rotor.

FIG.1.

FIG.2.

FIG.3.